# EUROPÄISCHE PATENTSCHRIFT

(11) **EP 3 293 313 B1**
(45) Veröffentlichungstag und Bekanntmachung des Hinweises auf die Patenterteilung: **28.11.2018**
(21) Anmeldenummer: 17190110.1
(22) Anmeldetag: 08.09.2017
(51) Int. Cl.: E02F 3/14, E02F 3/18, E02F 3/24, E02F 5/08, E02F 5/10, H02G 1/06, B28D 1/12, E01C 23/09

(54) **SCHNEIDWERKZEUG**
CUTTING TOOL
OUTIL DE COUPE

(30) Priorität: 12.09.2016 AT 508062016
(43) Veröffentlichungstag der Anmeldung: 14.03.2018
(73) Patentinhaber: Tyrolit - Schleifmittelwerke Swarovski K.G., 6130 Schwaz (AT)
(72) Erfinder: NEUBACH, Stefan, 6130 Schwaz (AT); MOLLER, Karl, Wellington, FL Florida 33414 (US)
(74) Vertreter: Torggler & Hofinger Patentanwälte

(56) Entgegenhaltungen:
- EP-A1- 2 518 217
- EP-A2- 1 129 824
- WO-A1-2012/102659
- DE-A1- 2 342 217
- KR-A- 20060 040 419
- US-A- 3 162 187
- US-A- 5 285 768
- US-B1- 7 178 517

## Beschreibung

Die Erfindung betrifft ein Schneidwerkzeug zum Herstellen eines schmalen Grabens im Boden zur Verlegung von Kabeln oder dergleichen, mit einer Trägervorrichtung, welche einen Nabenbereich zur Anbindung des Schneidwerkzeugs an einen Drehantrieb und einen Umfangsbereich aufweist, wobei im Umfangsbereich der Trägervorrichtung Schneidsegmente angeordnet sind, welche in axialer Richtung voneinander beabstandet sind, die Trägervorrichtung eine Umfangsfläche aufweist, an welcher Erhebungen angeordnet sind, welche in radialer Richtung von der Umfangsfläche abstehen und auf welchen die Schneidsegmente angeordnet sind, und zwischen den Erhebungen und den darauf angeordneten Schneidsegmenten Kanäle zur Leitung eines Kühlfluids, vorzugsweise Kühlwassers, angeordnet sind. Die Erfindung betrifft weiterhin eine Verlegemaschine zum Verlegen von Kabeln oder dergleichen im Boden sowie ein Verfahren zu Herstellung eines Schneidwerkzeugs.

Das Anwendungsgebiet der gattungsgemäßen Schneidwerkzeuge ist das "Micro-Trenching" zum Verlegen von Kabeln oder dergleichen, wobei unter dem Zusatz "oder dergleichen" zu verlegendes Material zu verstehen ist, welches ähnliche Dimensionen und Eigenschaften wie Kabel haben, wie beispielsweise flexible Umfüllungen, Röhren oder Leitungen. Die Grundidee beim Micro-Trenching besteht darin, dass zur Verlegung der Kabel in einem Verkehrsweg, der Verkehrsweg nicht großräumig geöffnet wird, sondern nur ein schmaler Graben in den Verkehrsweg geschnitten, in diesen das oder die Kabel verlegt und anschließend der Graben wieder geschlossen wird. Es gibt bereits Verlegemaschinen, welche alle drei Aufgaben in einer Einheit vereinen. Auf diese Weise können pro Tag hunderte Meter Kabel im Verkehrsweg verlegt werden.

Schneidwerkzeuge gemäß dem Oberbegriff des Anspruchs 1 sind beispielsweise in der WO 2012/102659 A1 offenbart. Diese Schneidwerkzeuge sind aus mehreren Schneidblättern und dazwischen angeordneten Stützstrukturen aufgebaut, wobei die Stützstrukturen neben der Stützfunktion ein Kanalisationssystem für Kühlwasser bereitstellen, welches ein axial zugeführtes Kühlwasser nach Außen zum Schneidbereich leitet.

Ein Problem der in der WO 2012/102659 A1 offenbarten Schneidwerkzeuge besteht darin, dass sie einen sehr aufwändigen Aufbau haben, der mit hohen Kosten verbunden ist. Gleichzeitig erhöht sich durch die Komplexität des Aufbaus auch die Verschleißanfälligkeit, wodurch die Schneidwerkzeuge häufiger ausgewechselt werden müssen, was sich ungünstig auf die Einsatzdauer der Schneidwerkzeuge auswirkt. Und schließlich wirkt sich der aufwändige Aufbau der Schneidwerkzeuge auch negativ auf deren Stabilität aus, was insbesondere bei härten Untergründen zu einer reduzierten Schnittleistung führt. Außerdem hat sich in der Praxis bewiesen, dass der Aufbau eines Sägeblattsatzes nach WO 2012/102659 A1, wobei die Sägeblätter dort z.B. durch Verkleben und/oder Bolzen miteinander verbunden sind, den hohen, im Einsatz auftretenden Kräften nicht genügt, und sich die einzelnen Blätter voneinander lösen bzw. durch zwischen die Blätter eindringende Gesteinspartikel auseinander gedrückt werden.

Die EP 1 129 824 A2 und die DE 23 42 217 offenbaren Schleifwerkzeuge mit einem zusammenhängenden Schleifbelag.

Die EP 2 518 217 A1 offenbart ein Fräsrad mit Schneidpicken.

Die technische Aufgabe der vorliegenden Erfindung besteht darin, die Nachteile des Stands der Technik zu beheben und ein verbessertes Schneidwerkzeug anzugeben, welches sich insbesondere durch eine erhöhte Stabilität und Lebensdauer auszeichnet und kostengünstiger in der Herstellung ist. Eine weitere Aufgabe besteht darin, eine Verlegemaschine mit einem solchen Schneidwerkzeug sowie ein Verfahren zur Herstellung eines Schneidwerkzeugs in einer besonders bevorzugten Ausführungsform anzugeben.

Diese Aufgaben werden gelöst durch die Merkmale der unabhängigen Ansprüche 1, 11 und 13.

Bei dem erfindungsgemäßen Schneidwerkzeug ist es somit vorgesehen, dass die Trägervorrichtung samt den Erhebungen einstückig ausgebildet ist.

Durch die einstückige Ausbildung der Trägervorrichtung erhöht sich im Vergleich zu einem mehrteiligen Aufbau die Stabilität des Schneidwerkzeugs. Gleichzeitig sind erheblich weniger Arbeitsschritte notwendig, um das Schneidwerkzeug herzustellen, wodurch sich im Vergleich zum Stand der Technik deutlich die Kosten reduzieren. Jegliches Spiel, welches in einem mehrteiligen Aufbau naturgemäß vorhanden ist und zu Verschleißerscheinungen führt, wird vermieden. Insbesondere kann kein relatives Spiel zwischen den in axialer Richtung voneinander beabstandeten Schneidsegmenten auftreten, da alle Schneidsegmente an der einstückig ausgebildeten Trägervorrichtung bzw. den in radialer Richtung von der Umfangsfläche abstehenden Erhebungen angeordnet sind.

Außerdem ist es bei einem einstückigen Aufbau ausgeschlossen, dass sich einzelne Blätter voneinander lösen bzw. durch zwischen die Blätter eindringende Gesteinspartikel auseinander gedrückt werden.

Gemäß einer bevorzugten Ausführungsform ist es vorgesehen, dass die Erhebungen in wenigstens zwei Reihen, welche in axialer Richtung voneinander beabstandet sind, angeordnet sind, bevorzugt wobei der Abstand benachbarter Reihen 2 mm bis 7 mm, besonders bevorzugt in etwa 4,5 mm, beträgt. Bei dieser Ausführungsform sind also nicht nur die Schneidsegment in axialer Richtung voneinander beabstandet, sondern auch die Erhebungen, auf welchen die Schneidsegmente angeordnet sind. Außerdem sind die Erhebungen in Reihen angeordnet. Insgesamt ergibt sich dadurch in einer Querschnittsansicht auf den Umfangsbereich eine Art Zinnenstruktur.

Es sind Ausführungsformen mit nur zwei Reihen aber auch mit drei Reihen oder mit mehr als drei Reihen denkbar, z.B. mit vier Reihen oder mit fünf Reihen. Mit steigender Anzahl der Reihen erhöht sich die Stärke der Trägervorrichtung bzw. des Schneidwerkzeugs, womit aber auch die Anforderung an die Maschinenleistung steigt, sodass sich daraus eine natürliche Grenze ergibt.

Gemäß einer vorteilhaften Weiterbildung der zuvor beschriebenen bevorzugten Ausführungsform ist es vorgesehen, dass die Erhebungen in wenigstens drei Reihen, welche in axialer Richtung voneinander beabstandet sind, angeordnet sind und wobei die Erhebungen der inneren Reihe(n) gegenüber den Erhebungen der äußeren Reihen in radialer Richtung weiter, vorzugsweise um eine Distanz von 1 mm, von der Umfangsfläche abstehen.

### Diese Konfiguration ist zweifacher Hinsicht vorteilhaft:

Zum einen ergibt sich hierdurch ein besonders vorteilhaftes Verfahren zur Herstellung dieses Schneidwerkzeugs, wobei in einem ersten Verfahrensschritt zuerst Schneidsegmente auf den Erhebungen der inneren Reihe(n) und anschließend in einem zweiten Verfahrensschritt Schneidsegmente auf den Erhebungen der äußeren Reihen angeordnet, vorzugsweise angeschweißt, werden. Dadurch dass die Erhebungen der inneren Reihe(n) gegenüber den Erhebungen der äußeren Reihen in radialer Richtung weiter von der Umfangsfläche abstehen, kann, wenn die Schneidsegmente an die Erhebungen angeschweißt werden und hierzu ein Laser verwendet wird, der Laserstrahl über die Erhebungen der äußeren Reihen hinweg unter einem rechten Winkel an die Erhebungen der inneren Reihe(n) herangeführt werden, wodurch die volle Laserleistung für den Schweißvorgang ausgenutzt werden kann. Auf diese Weise ist es möglich, die Erhebungen an den Verbindungsstellen zu den Schneidsegmenten in effizienter Weise aufzuschmelzen.

Ein weiterer Vorteil besteht zum anderen darin, dass der erste Einsatz eines solchermaßen ausgebildeten Schneidwerkzeugs verbessert funktioniert, da zuerst die Schneidsegmente der inneren Reihe(n) mit dem Boden in Kontakt tritt bzw. treten, wodurch sich ein optimierter Anschnitt ergibt. Im laufenden Betrieb schleifen sich die Segmente dann auf eine idente Höhe ein.

Wenn vier Reihen von Erhebungen bzw. darauf angeordneten Schneidsegmenten verwendet werden, bietet es sich an, die zwei inneren Mittelreihen gegenüber den Erhebungen der äußeren Reihen zu erhöhen. Im Falle von fünf Reihen könnte die mittlere Reihe nochmals gegenüber den Reihen zwei und vier erhöht werden. Insgesamt ergibt sich dadurch immer ein zur Mitte hin stufenweise ansteigender Aufbau, bei welchem die beiden beschriebenen Vorteile vorliegen.

Auch wenn eine Kühlung mittels eines Kühlfluids nicht zwingend erforderlich ist, so ist es trotz des einstückigen Aufbaus der Trägervorrichtung möglich, beim erfindungsgemäßen Schneidwerkzeug eine Kühlung mittels eines Kühlfluids vorzusehen, nämlich indem man durch die zwischen den Erhebungen und den darauf angeordneten Schneidsegmenten angeordneten Kanäle ein Kühlfluid leitet.

Bei einer Verlegemaschine zum Verlegen von Kabeln oder dergleichen im Boden, wobei die Verlegemaschine wenigstens ein solches Schneidwerkzeug aufweist, bietet es sich in diesem Zusammenhang an, dass wenigstens eine Quelle zur Abgabe eines Kühlfluids, vorzugsweise Kühlwassers, aufweist, welche derart relativ zum wenigstens einen Schneidwerkzeug angeordnet ist, dass das Kühlfluid im Umfangsbereich des wenigstens einen Schneidwerkzeugs auf die Erhebungen und die darauf angeordneten Schneidsegmente abgegeben werden kann.

Weitere vorteilhafte Ausführungsformen der Erfindung sind in den abhängigen Ansprüchen 4 bis 10 definiert.

Weitere Einzelheiten und Vorteile der Erfindung werden anhand der Figurenbeschreibung unter Bezugnahme auf die Zeichnungen im Folgenden näher erläutert. Dabei zeigt:
- Fig. 1: ein bevorzugtes Ausführungsbeispiel des Schneidwerkzeugs in einer Draufsicht von der Seite,
- Fig. 2: die Mittelebene dieses Schneidwerkzeugs ebenfalls in einer Draufsicht von der Seite,
- Fig. 3: eine Querschnittsdarstellung des Umfangsbereichs dieses Schneidwerkzeugs,
- Fig. 4: eine bevorzugte Ausführungsform einer erfindungsgemäßen Verlegemaschine, und
- Fig. 5: ein Flussdiagramm zur Veranschaulichung des erfindungsgemäßen Verfahrens zur Herstellung des Schneidwerkzeugs.

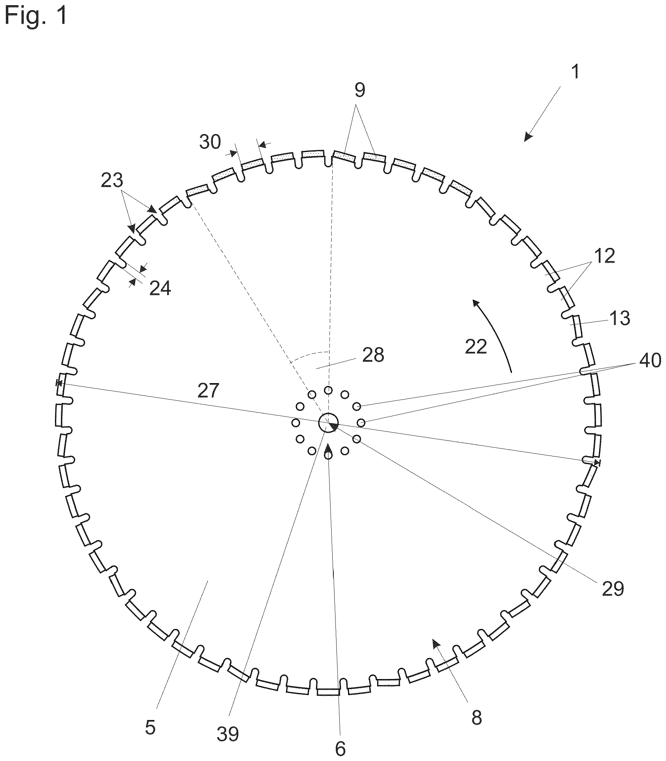

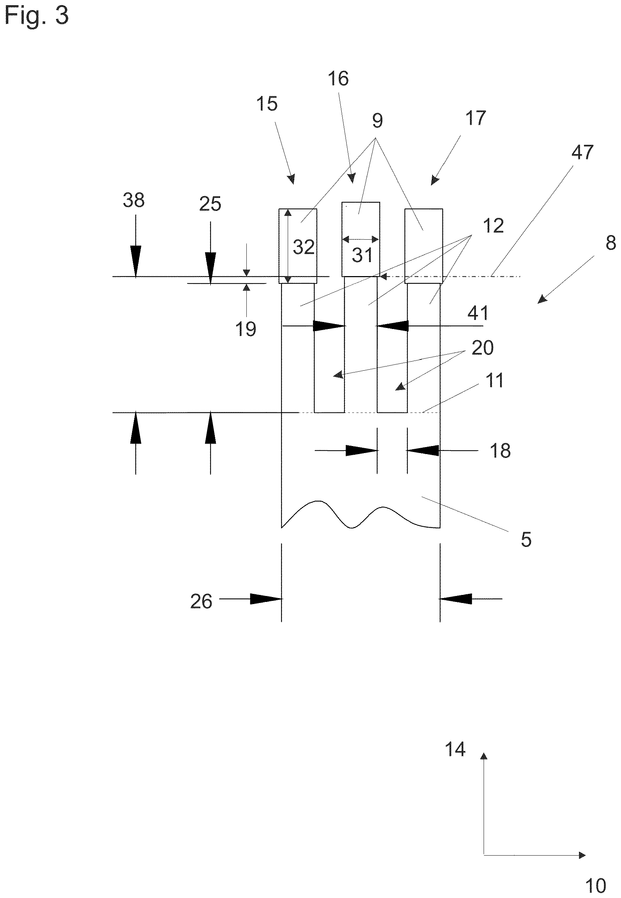

Das in den Figuren 1 bis 3 dargestellte Schneidwerkzeug 1 gemäß einem besonders bevorzugten Ausführungsbeispiel umfasst eine einstückig ausgebildete Trägervorrichtung 5, welche einen Nabenbereich 6 zur Anbindung des Schneidwerkzeugs 1 an einen Drehantrieb und einen Umfangsbereich 8 aufweist, wobei in diesem Umfangsbereich 8 der Trägervorrichtung 5 Schneidsegmente 9 angeordnet sind, welche in axialer Richtung 10 voneinander beabstandet sind (vergleiche Figur 3). Mit "axialer Richtung" ist eine Richtung parallel zur Rotationsachse des Schneidwerkzeugs 1 gemeint. Eine Richtung senkrecht hierzu wird im Folgenden als radiale Richtung 14 bezeichnet (vergleiche auch das in Figur 3 dargestellte Koordinatensystem).

Bei den Schneidsegmenten 9 kann es sich um Diamantsegmente handeln.

Erfindungsgemäß ist es vorgesehen, dass die Trägervorrichtung 5 einstückig ausgebildet ist und eine Umfangsfläche 11 aufweist (in der Figur 3 gestrichelt dargestellt), an welcher Erhebungen 12 und 13 angeordnet sind, welche in radialer Richtung 14 von dieser Umfangsfläche 11 abstehen und auf welchen die Schneidsegmente 9 angeordnet sind.

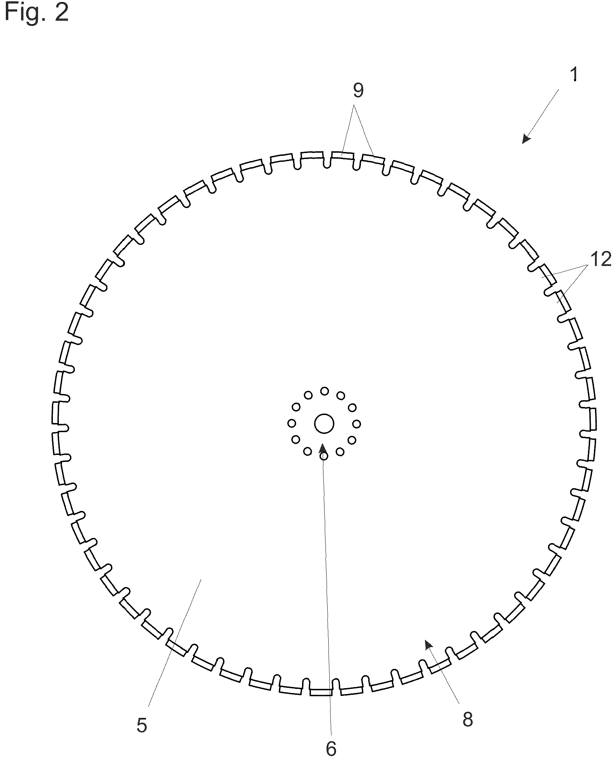

Im vorliegenden Fall sind die Erhebungen 12 und 13 in drei Reihen 15, 16 und 17 (vergleiche Figur 3), welche in axialer Richtung 10 voneinander beabstandet sind, angeordnet. Die Figur 1 zeigt dabei eine Draufsicht von der Seite auf das Schneidwerkzeug 1, das heißt, dass in diesem Fall die Reihen 16 bzw. 17 sichtbar sind. Die Schneidsegmente 9 der Mittelebene, welche man an den Stellen der Schutzsegmente (siehe weiter unten) sehen würde, wurden in dieser Darstellung der Übersichtlichkeit halber weggelassen. Die Figur 2 zeigt eine Draufsicht auf die Mittelebene ebenfalls von der Seite, das heißt, dass in diesem Fall die innere mittlere Reihe 16 der Erhebungen 12 sichtbar ist.

Der Abstand 18 benachbarter Reihen 15, 16 und 17 beträgt 2 mm bis 7 mm, vorzugsweise in etwa 4, 5 mm.

Im Zentrum 29 des im Wesentlichen rotationsymmetrisch ausgebildeten Schneidwerkzeugs 1 ist eine Mittelbohrung 39 vorgesehen, welche der Aufnahme einer Spindel eines Drehantriebs dient.

Konzentrisch um die Mittelbohrung 39 sind in regelmäßigen Winkelabständen Bohrungen 40 vorgesehen, über welche das Schneidwerkzeug 1 bzw. die Trägervorrichtung 5 drehfest mit dem Drehantrieb verbunden werden kann. Im dargestellten Fall umfasst der Nabenbereich 6 der Trägervorrichtung 5 also eine Mittelbohrung 39 sowie konzentrisch darum angeordnete Bohrungen 40.

Das Schneidwerkzeug 1 weist einen Durchmesser 27 von 700 mm bis 1200 mm, vorzugsweise in etwa 1000 mm, auf.

Die Erhebungen 12 und 13, an welchen die Schneidsegmente 9 angeordnet sind, sind in eine Drehrichtung 22 des Schneidwerkzeugs 1 durch Schlitze 23 voneinander beabstandet. Diese Schlitze 23 weisen eine Breite 24 von 2 mm bis 20 mm, vorzugsweise in etwa 13 mm, auf.

Insgesamt sind die Erhebungen 12 und 13 derart an der Trägervorrichtung 5 angeordnet, dass sich sowohl in in einer Draufsicht von der Seite als auch in axialer Richtung 10 eine Zinnenstruktur ergibt.
Die Schneidsegmente 9 sind an die Erhebungen 12 und 13 angeschweißt.

In bestimmten Winkelabständen 28 weist das Schneidwerkzeug 1 schräg in Richtung Zentrum 29 versetzte Erhebungen 13 bzw. daran angeordnete Schneidsegmente 9 auf. Diese "Schutzsegmente" sind dazu bestimmt, die Schweißstellen der übrigen Schneidsegmente 9 frei zu schneiden und damit zu schützen. Die Schutzsegmente sind nur an den beiden Außenseiten des Schneidwerkzeugs 1, d.h. bei den Reihen 15 und 17, vorgesehen. Bei der inneren Reihe 16 keine solchen Schutzsegmente erforderlich.

Insbesondere bezugnehmend auf die Figur 3 ist weiterhin auszuführen, dass die Erhebungen 12 der inneren Reihe 16 gegenüber den Erhebungen 12 und 13 der äußeren Reihen 15 und 17 in radialer Richtung 14 weiter, vorzugsweise um eine Distanz 19 von 1 mm, von der Umfangsfläche 11 abstehen.

Es ist auch gut erkennbar, dass die Schneidsegmente 9 in der radialen Verlängerung der Erhebungen 12 und 13 angeordnet sind. Das bedeutet, dass die Schneidsegmente 9 die Erhebungen 12, 13 mit einer Unterseite an den nach Außen gewandten Flächen der Erhebungen 12, 13 kontaktieren.

Weiterhin ist anhand der Figur 3 gut erkennbar, dass zwischen den Erhebungen 12, 13 und den darauf angeordneten Schneidsegmenten 9 Kanäle 20 ausgebildet sind, welche zur Leitung eines Kühlfluids verwendbar sind.

Die Erhebungen 12, 13 gegenüber der Umfangsfläche 11 weisen eine Höhe 25 bzw. 38 von 15 mm bis 150 mm, vorzugsweise in etwa 20 mm, auf.

Die Trägervorrichtung 5 weist eine in axialer Richtung 10 eine im Wesentlichen konstante Stärke 26 auf, wobei die Stärke 26 10 mm bis 40 mm beträgt, besonders bevorzugt in etwa 22 mm bis 23 mm.

Die Schneidsegmente 9 weisen eine Länge 30 von 30 mm bis 50 mm, vorzugweise in etwa 40 mm (vergleiche auch Figur 1), eine Breite 31 von 4 mm bis 7 mm, vorzugsweise in etwa 5,5 mm, und eine Höhe 32 von 5 mm bis 15 mm, vorzugsweise in etwa 10 mm, auf.

Die Erhebungen 12, 13 weisen in axialer Richtung 10 eine Breite 41 von 3 mm bis 8 mm, vorzugsweise in etwa 5 mm, auf.

Die Schneidsegmente 9 sind in axialer Richtung 10 gegenüber den Erhebungen 12, 13 um einige Zehntel Millimeter verbreitert.

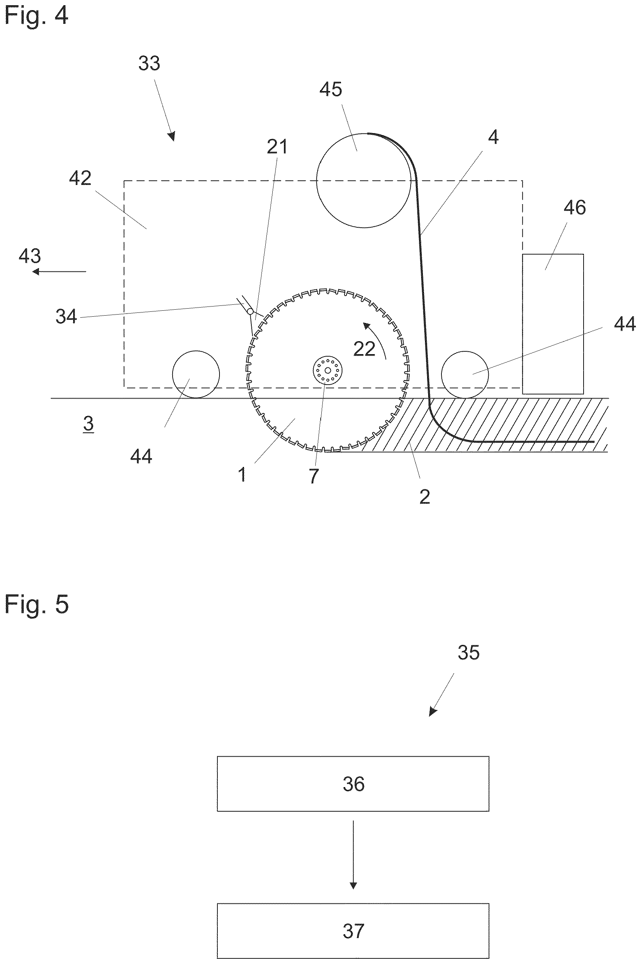

Mit einer strichpunktierten Linie ist in der Figur 3 auch noch ein Laserstrahl 47 angedeutet, welcher im Zuge des Verfahrens 35 zur Herstellung des Schneidwerkzeugs 1 (vergleiche auch Figur 5) im Zuge des ersten Verfahrensschritts 36 dazu verwendet wird, zuerst die Schneidsegmente 9 an die Erhebungen 12 der inneren Reihe 16 anzuschweißen. Dadurch dass die Erhebungen 12 der inneren Reihe 16 gegenüber den Erhebungen 12, 13 der äußeren Reihen 15 und 17 in radialer Richtung 14 weiter von der Umfangsfläche 11 abstehen, kann der Laserstrahl 47 über die Erhebungen 12, 13 der äußeren Reihen 15 und 17 unter einem im Wesentlichen rechten Winkel an die Schweißstelle herangeführt werden, da die Schneidsegmente 9 an in Erhebungen 12 und 13 der äußeren Reihen 15 und 17 ja erst im Zuge des zweiten Verfahrensschritts 37 angeschweißt werden.

In der Figur 4 ist schematisch eine Verlegemaschine 33 zum Verlegen von Kabeln 4 oder dergleichen im Boden 3 dargestellt, wobei die Verlegemaschine 33 ein Schneidwerkzeug 1 aufweist.

Das Schneidwerkzeug 1 ist über den Nabenbereich der Trägervorrichtung mit einem Drehantrieb 7 gekoppelt, wodurch das Schneidwerkzeug in Rotation versetzt werden kann mit einer bevorzugten Drehrichtung 22.

Die Verlegemaschine 33 weist weiterhin eine Quelle 34 zur Abgabe eines Kühlfluids 21 in Form von Kühlwasser auf, wobei die Quelle 34 derart relativ zum Schneidwerkzeug 1 angeordnet ist, dass das Kühlfluid 21 im Umfangsbereich des Schneidwerkzeugs 1 auf die Erhebungen und die darauf angeordneten Schneidsegmente abgegeben werden kann. Das Kühlfluid wird dann in weiterer Folge in den Kanälen 20 (vergleiche Figur 3) weitergeleitet und dient der Kühlung der Schneidsegmente 9 bzw. der angrenzenden Bereiche der Trägervorrichtung 5.

Das Schneidwerkzeug 1 kontaktiert im Zuge der Rotation den Boden 3 und schneidet bzw. fräst einen schmalen Graben 2 in den Boden 3. Die Verlegemaschine 33 kann eine Sammelvorrichtung zur Zwischenspeicherung des abgetragenen Bodenmaterials aufweisen.

Die Verlegemaschine 33 weist Wälzkörper 44 auf, über welche die Verlegemaschine 33 am Boden 3 abgestützt ist und über welche sie angetrieben in eine Fortbewegungsrichtung 43 bewegt werden kann.

Der Fahrzeugrahmen 42 der Verlegemaschine 33 ist in der Figur 4 gestrichelt angedeutet.

Die Verlegemaschine 33 umfasst weiterhin zumindest eine Abspulvorrichtung 45, von welcher das zu verlegende Kabel 4 abgespult und im Graben 2 verlegt werden kann. Die Verlegemaschine 33 kann natürlich auch mehrere Abspulvorrichtungen 45 umfassen und dazu ausgebildet sein, mehrere Kabel 4 im Graben 2 zu verlegen.

Und schließlich weist die Verlegemaschine 33 auch noch eine Vorrichtung 46 zur Abgabe von Beton oder dergleichen auf, mit welcher der Graben 2 nach dem Verlegen des Kabels sogleich wieder verschlossen werden kann.

Figur 5 veranschaulicht anhand eines Flussdiagramms schematisch das Verfahren 35 zur Herstellung des Schneidwerkzeugs 1, wobei in einem ersten Verfahrensschritt 36 zuerst Schneidsegmente 9 auf den Erhebungen 12 der inneren Reihe 16 und anschließend in einem zweiten Verfahrensschritt 37 Schneidsegmente 9 auf den Erhebungen 12 und 13 der äußeren Reihen 15 und 17 angeordnet bzw. angeschweißt werden (vergleiche auch Figur 3).

## Patentansprüche

1. Schneidwerkzeug (1) zum Herstellen eines schmalen Grabens (2) im Boden (3) zur Verlegung von Kabeln (4) oder dergleichen, mit einer Trägervorrichtung (5), welche einen Nabenbereich (6) zur Anbindung des Schneidwerkzeugs (1) an einen Drehantrieb (7) und einen Umfangsbereich (8) aufweist, wobei im Umfangsbereich (8) der Trägervorrichtung (5) Schneidsegmente (9) angeordnet sind, welche in axialer Richtung (10) voneinander beabstandet sind, die Trägervorrichtung (5) eine Umfangsfläche (11) aufweist, an welcher Erhebungen (12, 13) angeordnet sind, welche in radialer Richtung (14) von der Umfangsfläche (11) abstehen und auf welchen die Schneidsegmente (9) angeordnet sind, und zwischen den Erhebungen (12, 13) und den darauf angeordneten Schneidsegmenten (9) Kanäle (20) zur Leitung eines Kühlfluids (21), vorzugsweise Kühlwassers, angeordnet sind, **dadurch gekennzeichnet, dass** die Trägervorrichtung (5) samt den Erhebungen (12, 13) einstückig ausgebildet ist.

2. Schneidwerkzeug (1) nach Anspruch 1, wobei die Erhebungen (12, 13) in wenigstens zwei Reihen (15, 16, 17), welche in axialer Richtung (10) voneinander beabstandet sind, angeordnet sind, bevorzugt wobei der Abstand (18) benachbarter Reihen (15, 16, 17) 2 mm bis 7 mm, besonders bevorzugt in etwa 4,5 mm, beträgt.

3. Schneidwerkzeug (1) nach Anspruch 2, wobei die Erhebungen (12, 13) in wenigstens drei Reihen (15, 16, 17), welche in axialer Richtung (10) voneinander beabstandet sind, angeordnet sind, und wobei die Erhebungen (12) der inneren Reihe(n) (16) gegenüber den Erhebungen (12, 13) der äußeren Reihen (15, 17) in radialer Richtung (14) weiter, vorzugsweise um eine Distanz (19) von 1mm, von der Umfangsfläche (11) abstehen.

4. Schneidwerkzeug (1) nach einem der Ansprüche 1 bis 3, wobei die Schneidsegmente (9) an die Erhebungen (12, 13) angeschweißt sind.

5. Schneidwerkzeug (1) nach einem der Ansprüche 1 bis 4, wobei die Erhebungen (12, 13) in eine Drehrichtung (22) des Schneidwerkzeugs (1) durch Schlitze (23) voneinander beabstandet sind, bevorzugt wobei die Schlitze (23) eine Breite (24) von 2 mm bis 20 mm, besonders bevorzugt in etwa 13 mm, aufweisen.

6. Schneidwerkzeug (1) nach einem der Ansprüche 1 bis 5, wobei die Erhebungen (12, 13) gegenüber der Umfangsfläche (11) eine Höhe (25, 38) von 15 mm bis 25 mm, vorzugsweise in etwa 20 mm, aufweisen.

7. Schneidwerkzeug (1) nach einem der Ansprüche 1 bis 6, wobei die Trägervorrichtung (5) eine in axialer Richtung (10) im Wesentlichen konstante Stärke (26) aufweist, bevorzugt wobei die Stärke (26) 10 mm bis 40 mm beträgt, besonders bevorzugt in etwa 22 mm bis 23 mm.

8. Schneidwerkzeug (1) nach einem der Ansprüche 1 bis 7, wobei das Schneidwerkzeug (1) einen Durchmesser (27) von 700 mm bis 1200 mm, vorzugsweise in etwa 1000 mm, aufweist.

9. Schneidwerkzeug (1) nach einem der Ansprüche 1 bis 8, wobei das Schneidwerkzeug (1) in bestimmten Winkelabständen (28) schräg in Richtung Zentrum (29) versetzte Erhebungen (13) bzw. daran angeordnete Schneidsegmente (9) aufweist.

10. Schneidwerkzeug (1) nach einem der Ansprüche 1 bis 9, wobei die Schneidsegmente (9)
- eine Länge (30) von 30 mm bis 50 mm, vorzugsweise in etwa 40 mm, und/oder
- eine Breite (31) von 4 mm bis 7 mm, vorzugsweise in etwa 5,5 mm, und/oder
- eine Höhe (32) von 5 mm bis 15 mm, vorzugsweise in etwa 10 mm, aufweisen.

11. Verlegemaschine (33) zum Verlegen von Kabeln (4) oder dergleichen im Boden (3), **dadurch gekennzeichnet, dass** die Verlegemaschine (33) wenigstens ein Schneidwerkzeug (1) nach einem der vorhergehenden Ansprüche aufweist.

12. Verlegemaschine (33) nach Anspruch 11, wobei die Verlegemaschine (33) wenigstens eine Quelle (34) zur Abgabe eines Kühlfluids (21), vorzugsweise Kühlwassers, aufweist, welche derart relativ zum wenigstens einen Schneidwerkzeug (1) angeordnet ist, dass das Kühlfluid (21) im Umfangsbereich (8) des wenigstens einen Schneidwerkzeugs (1) auf die Erhebungen (12, 13) und die darauf angeordneten Schneidsegmente (9) abgegeben werden kann.

13. Verfahren (35) zur Herstellung eines Schneidwerkzeugs (1) nach Anspruch 3, wobei in einem ersten Verfahrensschritt (36) zuerst Schneidsegmente (9) auf den Erhebungen (12) der inneren Reihe(n) (16) und anschließend in einem zweiten Verfahrensschritt (37) Schneidsegmente (9) auf den Erhebungen (12, 13) der äußeren Reihen (15, 17) angeordnet, vorzugsweise angeschweißt, werden.

## Claims

1. A cutting tool (1) for producing a narrow trench (2) in the ground (3) for laying cables (4) or the like, comprising a carrier device (5) which has a hub region (6) for connecting the cutting tool (1) to a rotary drive (7) and a peripheral region (8), wherein arranged in the peripheral region (8) of the carrier device (5) are cutting segments (9) spaced from each other in the axial direction (10), the carrier device (5) has a peripheral surface (11) at which are arranged raised portions (12, 13) which project from the peripheral surface (11) in the radial direction (14) and on which the cutting segments (9) are arranged, and arranged between the raised portions (12, 13) and the cutting segments (9) arranged thereon are passages (20) for carrying a cooling fluid (21), preferably cooling water, **characterised in that** the carrier device (5) together with the raised portions (12, 13) is in one piece.

2. The cutting tool (1) according to claim 1 wherein the raised portions (12, 13) are arranged in at least two rows (15, 16, 17) spaced from each other in the axial direction (10), preferably wherein the spacing (18) of adjacent rows (15, 16, 17) is 2 mm to 7 mm, particularly preferably about 4.5 mm.

3. The cutting tool (1) according to claim 2 wherein the raised portions (12, 13) are arranged in at least three rows (15, 16, 17) spaced from each other in the axial direction (10) and wherein the raised portions (12) of the inner row or rows (16) project from the peripheral surface (11) further in the radial direction (14), preferably by a distance (19) of 1 mm, in relation to the raised portions (12, 13) of the outer rows (15, 17).

4. The cutting tool (1) according to one of claims 1 to 3 wherein the cutting segments (9) are welded to the raised portions (12, 13).

5. The cutting tool (1) according to one of claims 1 to 4 wherein the raised portions (12, 13) are spaced from each other by slots (23) in a direction of rotation (22) of the cutting tool (1), preferably wherein the slots (23) are of a width (24) of 2 mm to 20 mm, particularly preferably about 13 mm.

6. The cutting tool (1) according to one of claims 1 to 5 wherein the raised portions (12, 13) are of a height (25, 38) of 15 mm to 25 mm, preferably about 20 mm, with respect to the peripheral surface (11).

7. The cutting tool (1) according to one of claims 1 to 6 wherein the carrier device (5) is of a substantially constant thickness (26) in the axial direction (10), wherein preferably the thickness (26) is 10 mm to 40 mm, particularly preferably about 22 mm to 23 mm.

8. The cutting tool (1) according to one of claims 1 to 7 wherein the cutting tool (1) is of a diameter (27) of 700 mm to 1200 mm, preferably about 1000 mm.

9. The cutting tool (1) according to one of claims 1 to 8 wherein the cutting tool (1) has raised portions (13) displaced inclinedly in the direction of the centre (29) at given angular spacings (28) and cutting segments (9) arranged thereon.

10. The cutting tool (1) according to one of claims 1 to 9 wherein the cutting segments (9)
- are of a length (30) of 30 mm to 50 mm, preferably about 40 mm, and/or
- are of a width (31) of 4 mm to 7 mm, preferably about 5.5 mm, and/or
- are of a height (32) of 5 mm to 15 mm, preferably about 10 mm.

11. A laying machine (33) for laying cables (4) or the like in the ground (3) **characterised in that** the laying machine (33) has at least one cutting tool (1) according to one of the preceding claims.

12. The laying machine (33) according to claim 11 wherein the laying machine (33) has at least one source (34) for the delivery of a cooling fluid (21), preferably cooling water, which is so arranged relative to the at least one cutting tool (1) that the cooling fluid (21) can be delivered in the peripheral region (8) of the at least one cutting tool (1) on to the raised portions (12, 13) and the cutting segments (9) arranged thereon.

13. A process (35) for producing a cutting tool (1) according to claim 3 wherein in a first process step (36) firstly cutting segments (9) are arranged, preferably welded, on the raised portions (12) of the inner row or rows (16) and then in a second process step (37) cutting segments (9) are arranged, preferably welded, on the raised portions (12, 13) of the outer rows (15, 17).

## Revendications

1. Outil de coupe (1) pour la fabrication d'un fossé étroit (2) dans le sol (3) pour la pose de câbles (4) ou similaire, avec un dispositif porteur (5) qui présente une zone de moyeu (6) pour la liaison de l'outil de coupe (1) à un entraînement rotatif (7) et une zone périphérique (8), dans lequel des segments de coupe (9) sont agencés dans la zone périphérique (8) du dispositif porteur (5), lesquels sont espacés dans la direction axiale (10) les uns des autres, le dispositif porteur (5) présente une surface périphérique (11), sur laquelle des élévations (12, 13) sont agencées, qui dépassent de la surface périphérique (11) dans la direction radiale (14) et sur lesquelles les segments de coupe (9) sont agencés, et, entre les élévations (12, 13) et les segments de coupe (9) agencés sur elles, des canaux (20) sont agencés pour la conduite d'un fluide de refroidissement (21), de préférence de l'eau de refroidissement, **caractérisé en ce que** le dispositif porteur (5) est réalisé avec les élévations (12, 13) d'un seul tenant.

2. Outil de coupe (1) selon la revendication 1, dans lequel les élévations (12, 13) sont agencées dans au moins deux rangées (15, 16, 17) qui sont espacées l'une de l'autre dans la direction axiale (10), de préférence dans lequel la distance (18) entre des rangées adjacentes (15, 16, 17) est de 2 mm à 7 mm, de manière particulièrement préférée à peu près de 4,5 mm.

3. Outil de coupe (1) selon la revendication 2, dans lequel les élévations (12, 13) sont agencées dans au moins trois rangées (15, 16, 17) qui sont espacées dans la direction axiale (10) les unes des autres, et dans lequel les élévations (12) de la ou des rangées intérieures (16) dépassent par rapport aux élévations (12, 13) des rangées extérieures (15, 17) dans la direction radiale (14) davantage, de préférence d'une distance (19) de 1 mm, de la surface périphérique (11).

4. Outil de coupe (1) selon l'une quelconque des revendications 1 à 3, dans lequel les segments de coupe (9) sont soudés sur les élévations (12, 13).

5. Outil de coupe (1) selon l'une quelconque des revendications 1 à 4, dans lequel les élévations (12, 13) sont espacées l'une de l'autre dans une direction de rotation (22) de l'outil de coupe (1) par des fentes (23), de préférence dans lequel les fentes (23) présentent une largeur (24) de 2 mm à 20 mm, de manière particulièrement préférée à peu près de 13 mm.

6. Outil de coupe (1) selon l'une quelconque des revendications 1 à 5, dans lequel les élévations (12, 13) présentent par rapport à la surface périphérique (11) une hauteur (25, 38) de 15 mm à 25 mm, de préférence à peu près de 20 mm.

7. Outil de coupe (1) selon l'une quelconque des revendications 1 à 6, dans lequel le dispositif porteur (5) présente une épaisseur (26) sensiblement constante dans la direction axiale (10), de préférence dans lequel l'épaisseur (26) s'élève de 10 mm à 40 mm, de manière particulièrement préférée à peu près de 22 mm à 23 mm.

8. Outil de coupe (1) selon l'une quelconque des revendications 1 à 7, dans lequel l'outil de coupe (1) présente un diamètre (27) de 700 mm à 1200 mm, de préférence à peu près de 1000 mm.

9. Outil de coupe (1) selon l'une quelconque des revendications 1 à 8, dans lequel l'outil de coupe (1) présente (13), à des distances angulaires déterminées (28), des élévations ou des segments de coupe (9) agencés sur elles, inclinés en direction du centre (29).

10. Outil de coupe (1) selon l'une quelconque des revendications 1 à 9, dans lequel les segments de coupe (9) présentent
- une longueur (30) de 30 mm à 50 mm, de préférence à peu près de 40 mm, et/ou
- une largeur (31) de 4 mm à 7 mm, de préférence à peu près de 5,5 mm, et/ou
- une hauteur (32) de 5 mm à 15 mm, de préférence à peu près de 10 mm.

11. Machine de pose (33) pour la pose de câbles (4) ou similaires dans le sol (3), **caractérisée en ce que** la machine de pose (33) présente au moins un outil de coupe (1) selon l'une quelconque des revendications précédentes.

12. Machine de pose (33) selon la revendication 11, dans laquelle la machine de pose (33) présente au moins une source (34) pour la sortie d'un fluide de refroidissement (21), de préférence de l'eau de refroidissement, qui est agencée par rapport à au moins un outil de coupe (1) de telle manière que le fluide de refroidissement (21) puisse être émis dans la zone périphérique (8) d'au moins un outil de coupe (1) sur les élévations (12, 13) et les segments de coupe (9) agencés dessus.

13. Procédé (35) pour la fabrication d'un outil de coupe (1) selon la revendication 3, dans lequel dans une première étape de procédé (36) tout d'abord des segments de coupe (9) sont agencés, de préférence soudés, sur les élévations (12) de la ou des rangées intérieures (16) et ensuite, dans une seconde étape de procédé (37), des segments de coupe (9) sont agencés, de préférence soudés, sur les élévations (12, 13) des rangées extérieures (15, 17).
